# EUROPÄISCHE PATENTSCHRIFT

(11) **EP 1 859 527 B1**
(45) Veröffentlichungstag und Bekanntmachung des Hinweises auf die Patenterteilung: **12.08.2009**
(21) Anmeldenummer: 06708187.7
(22) Anmeldetag: 10.02.2006
(51) Int. Cl.: H02P 6/14

(54) **ELEKTRISCH KOMMUTIERTER MOTOR UND VERFAHREN ZU SEINER STEUERUNG**
ELECTRICALLY COMMUTATED MOTOR AND METHOD FOR CONTROLLING SAID MOTOR
MOTEUR A COMMUTATION ELECTRIQUE ET PROCEDE POUR LE COMMANDER

(30) Priorität: 17.03.2005 DE 102005012859
(43) Veröffentlichungstag der Anmeldung: 28.11.2007
(73) Patentinhaber: Pierburg GmbH, 41460 Neuss (DE)
(72) Erfinder: MARKMANN, Matthias, 44536 Lünen (DE); SCHMÜLLING, Benedikt, 52074 Aachen (DE); STEPHAN, Waldemar, 44319 Dortmund (DE)
(74) Vertreter: Patentanwälte ter Smitten
(86) Internationale Anmeldenummer: PCT/EP2006/050844
(87) Internationale Veröffentlichungsnummer: WO 2006/097393

(56) Entgegenhaltungen:
- DE-A1- 10 009 900
- DE-A1- 19 845 626
- US-A1- 2004 267 421

## Beschreibung

Die Erfindung bezieht sich auf einen elektrisch kommutierten Motor und ein Verfahren zur Steuerung eines elektrisch kommutierten Motors mit mehreren Stator-Phasen und einem Rotor.

Zur Steuerung und Regelung eines elektrisch kommutierten Motors ist eine Dr-ehfeld-Regelung in Abhängigkeit von dem Drehfeld des permanent erregen Rotors des Motors erforderlich. Als Regelungsstrategien sind die Einphasen-Regelung und die Mehrphasen-Regelung bekannt, die bei elektrisch kommutierten Motoren alternativ eingesetzt werden. Bei der Einphasen-Regelung (DE 198 45 626 A1) wird lediglich in Bezug auf eine einzige der Stator-Phasen, der sogenannten Masterphase, die Regelabweichung ermittelt und das Stator-Phasen-Drehfeld in Abhängigkeit von der Regelabweichung geregelt. Die Regelung erfolgt in Abhängigkeit von einer einzigen Phase, folglich mit einer Auflösung von 360°. Bei Drehzahländerungen oder größeren Störungen kann die Einphasen-Regelung aufgrund ihrer Grobmaschigkeit insbesondere bei niedrigen Drehzahlen und unter Last unter Umständen keine ausreichende Betriebssicherheit gewährleisten.

Zwar sind Mehrphasen-Regelungen (US 2004/0267421 A1) bei denen die Phasenabweichung jeder Statorphase in die Regelung mit einbezogen wird, um ein Vielfaches engmaschiger. Allerdings kann eine Mehrphasen-Regelung im sogenannten stationären Zustand, d. h. bei konstanter Drehzahl und relativ niedrigen Lasten aufgrund mechanischer Fertigungstoteranzen, die beispielsweise Phasenunsymmetrien des Stators bedingen oder aufgrund ungenauer Sensorpositionierungen eine schlechte oder mitunter unzureichende Regelgute aufweisen. Dies ist insbesondere bei digitalen, also nicht kontinuierlich regelnden Regelungssystemen festzustellen.

Aufgabe der Erfindung ist es demgegenüber einen elektrisch kommutierten Motor mit einer verbesserten Regelung bzw. ein verbessertes Verfahren zur Regelung eines elektrisch kommutierten Motors zu schaffen.

Diese Aufgabe wird erfindungsgemäß gelöst mit den Merkmalen des Anspruches 1 bzw. 5.

Der elektrisch kommutierte Motor gemäß Anspruch 1 weist Sensoren zur Erfassung der Regelabweichung des Rotors in Bezug auf die Statorphasen auf. Ferner ist eine Phasenregelung für das Stator-Phasen-Drehfeld in Abhängigkeit von der erfassten Regelabweichung vorgesehen. Die Phasenregelung weist sowohl einen Einphasen-Regler für eine Einphasen-Betricbsart als auch einen Mehrphasen-Regler für eine Mehrphasen-Betriebsart auf. Ferner ist ein Regelabweichungs-Bewertungselement vorgesehen, das die Größe der Regelabweichung bewertet und in Abhängigkeit von der Bewertung die Einphasen oder die Mehrphasen-Betriebsart wählt. Die Betriebsart wird in Abhängigkeit von der Größe der Regelabweichung gewählt. Bei relativ kleinen Regelabweichungen wird die Einphasen-Betriebsart gewählt, bei relativ großen Regelabweichungen wird die Mehrphasen-Betriebsart gewählt. Hierdurch wird einerseits bei geringer Regelabweichung und insbesondere bei geringen Drehzahlen eine hohe Regelstabilität, d. h. eine hohe Regelgüte sichergestellt, was insbesondere bei digitalen Regelungssystemen eine erhebliche Verbesserung der Regelqualität mit sich bringt. In der Einphasen-Betriebsart wird die Regelabweichung einer einzigen Statorphase, der sogenannten Masterphase, zur Regelung herangezogen. Bei größeren Regelabweichungen wird insbesondere bei niedrigen Drehzahlen die Mehrphasen-Betriebsart gewählt. Bei der Mehrphasen-Betriebsart werden alle Stator-Phasen ausgewertet. Für jede Phase wird die Regelabweichung bestimmt. Bei einem Dreiphasensystem wird die Auflösung beispielsweise um das Dreifache auf 120° verfeinert. Hierdurch wird insbesondere bei niedrigen Drehzahlen sichergestellt, dass die Regelung schnell genug reagieren kann, um Fehlfunktionen zu vermeiden.

Fällt die Regelabweichung während bzw. nach einer Mehrphasen-Betriebsart wieder unter eine bestimmte Größe, wird von der Mehrphasen-Betriebsart wieder in die Einphasen-Betriebsart zurückgeschaltet.

Die an die Regelabweichung gekoppelte Wahl der Betriebsart verbessert insbesondere bei geringen Drehzahlen die Regelzeitstabilität, führt zu einer geringeren Siörempfindlichkeit gegenüber Last- und Spannungssprüngen, verringert die Parameter-Empfindlichkeit, verbessert die Ausregetdynamik, d. h. beispielsweise die Solldrehzahl wird schneller erreicht, und verbessert das Dämpfungsmaß. Insgesamt wird das Regelungssystem durch die Regelabweichungs-abhängige Wahl der Betriebsart erheblich robuster gegenüber jeder Art von Störgrößen.

Der Einphasen-Regler und der Mehrphascn-Regler können physisch oder in Form von Software auch als ein einziger Komplex ausgebildet sein.

Vorzugsweise ist dem Bewertungselement ein Toleranzband-Speicher zugeordnet, der Toteranzwerte für die Regelabweichung speichert, wobei das Bewertungselement bei Phasenabweichungen innerhalb des Toleranzbandes die Einphasen-Betriebsart und bei Phasenabweichungen außerhalb des Toleranzbandes die Mehrphasen-Betriebsart wählt. Das Toleranzband kann abhängig von Parametern wie beispielsweise der Drehzahl konstant oder nicht konstant ausgebildet sein. Das Toleranzband bzw. die Toleranzwerte können beispielsweise bestimmt werden, indem zunächst für jede Phase die mechanisch bedingten Phascnunsymmctrien ermittelt werden, die durch Ungenauigkeiten der Statorphasen, der Sensoren und anderer Bauelemente praktisch unvermeidlich sind. Hierzu wird zunächst im stationären Zustand, d. h. ohne äußere Störeinflüsse und bei konstanter Soll-Dr-chzahl, die maximale Regelabweichung aller Phasen über den gesamten Drehzahlbereich bestimmt-Das Toleranzband muss so weit sein, dass die physischen Unsymmetrien alleine keine Regelabweichungen außerhalb des Toleranzbandes bewirken können. Die Toleranzband-Breite ergibt sich beispielsweise aus der durch physische Unsymmetrien bewirkten Regelabweichung zuzüglich einer Sicherheit.

Gemäß einer bevorzugten Ausgestaltung ist dem Bewertungselement ein Verzögerungselement zugeordnet, das das Umschalten von der Mehrphasen-Betriebsart in die Einphasen-Betriebsart um einen festgelegten Wert verzögert. Der festgelegte Wert kann beispielsweise eine Anzahl von aufeinander folgenden Regelabweichungen innerhalb des Toleranzbandes sein. Hierdurch wird die Mchrphasen-Betriebsart solange aufrechterhalten, bis eine bestimmte Anzahl aufeinander folgender Regelabweichungen innerhalb des Toleranzbandes liegt. Bei einem dreiphasigen Stator können dies beispielsweise vier Regelabweichungen innerhalb des Toleranzbandes hintereinander sein. Durch diese Maßnahme wird die Stabilität der Regelung verbessert und Schwebungseffekte durch ständiges Umschalten zwischen den beiden Betriebsarten vermieden.

Gemäß dem nebengeordneten Verfahrensanspruch weist das Verfahren zur Regelung eines elektrisch kommutierten Motors mit mehreren Stator-Phasen und einem Rotor folgende Verfahrensschritte auf:
- Erfassung der Regelabweichung des Rotors in Bezug auf die Stator-Phasen,
- Phasenregelung des Stator-Phasen-Drehfeldes in Abhängigkeit von der erfassten Regelabweichung, und
- Wählen zwischen einer Einphasen-Betriebsart und einer Mehrphasen-Betriebsart in Abhängigkeit von der Größe der Regelabweichung.

Die Regelung des Motors wird nicht starr in einer einzigen Betriebsart vollzogen, sondern flexibel, je nachdem welche der beiden Betriebsarten besser für die betreffende Regelsituation ist.

Im Folgenden wird unter Bezugnahme auf die Zeichnungen ein Ausführungsbeispiel der Erfindung näher erläutert.

Es zeigen:
- Fig. 1: einen elektrisch kommutierten Motor einschließlich einer Phasenregelung in schematischer Darstellung, und
- Fig. 2: eine grafische Darstellung eines beispielhaften zeitlichen Verlaufes der Betriebsart in Abhängigkeit von der Regelabweichung.

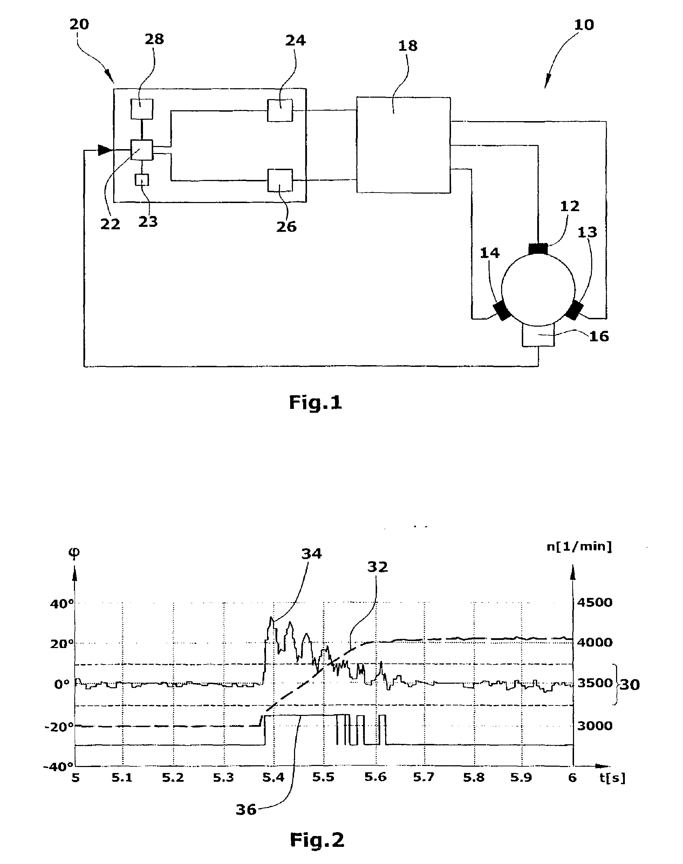

In der Fig. 1 ist schematisch ein elektrisch kommutierter Motor 10 mit drei Statorphasen 12, 13, 14, einem nicht dargestellten Motor-Rotor, mit Sensoren 16, einem Motortreiber 18 sowie einer Phasenregelung 20 dargestellt. Die Phasenregelung 20 steuert das Stator-Phasen-Drehfeld in Abhängigkeit von der durch die Sensoren 16 erfasste Regelabweichung, d. h. der rotatorischen Abweichung des Rotors von seiner Sollposition in Bezug auf eine Statorphase 12 oder mehrere Statorphasen 12, 13, 14.

Die Phasenregelung 20 weist mehrere Elemente auf, nämlich ein Regelabweichungs-Bewertungselement 22, einen Einphasen-Regler 24 für eine Einphasen-Betriebsart, einen Mehrphasen-Regler 26 für eine Mehrphasen-Betriebsart sowie einen Toleranzband-Speicher 28.

In dem Toleranzband-Speicher 28 sind Toleranzwerte fur die Regelabweichung gespeichert. Die Toleranzwerte wurden durch Bestimmung der Regelabweichung im sogenannten stationären Zustand des Motors, d. h. bei konstanter Drehzahl und konstanter Last und ohne weitere Störeinflüsse unter-Zuschlag eines Sicherheitsbetrages über den gesamten Drehzahlbereich des Motors bestimmt.

In der Fig. 2 ist das so ermittelte Toleranzband 30 dargestellt, das im vorliegenden Fall eine Breite von 20° hat.

Dem Bewertungselement 22 ist ein Verzögerungselement 23 zugeordnet, das das Zurückschalten von der Mehrphasen-Betriebsart in die Einphasen-Betriebsart um einen festgelegten Wert verzögert. Dieser Wert ist eine Anzahl von vier aufeinander folgenden Regelabweichungen innerhalb des Toleranzbandes.

Während in der Emphasen-Betriebsart die Regelabweichung einer einzigen Stator-Phase 12, der sogenannten Masterphase, der Regelung zugrunde gelegt wird, wird in der Mehrphasen-Betriebsart die Regelabweichung aller drei Stator-Phasen 12, 13, 14 der Regelung zugrunde gelegt. Die Mehrphasen-Betriebsart ist also um das Dreifache engmaschiger. Dies ist insbesondere bei niedrigen Drehzahlen und Auftreten einer Störgröße bzw. Änderung der Soll-Drehzahl von Bedeutung.

Die beiden Betriebsarten unterscheiden sich in der technischen Praxis ausschließlich durch die Aufrufhäufigkcit und in der Berücksichtigung der Regeiabweichrang einer einzigen oder aller Phasen. Im Einphasen-Betrieb werden die Ergebnisse der berechneten Regelabweichungen der Nicht-Masterphasen insoweit ignoriert, als der Regler ausschließlich zum Zeitpunkt der berechneten Regelabweichung der Masterphase aufgerufen wird. Die Regelabweichungen der übrigen Phasen werden zwar ermittelt, jedoch nicht ausgewertet. Der Regler ist zu diesen Zeitpunkten nicht aktiv.

In der Fig. 2 ist beispielhaft eine Änderung der Soll-Drehzahl, der hieraus resultierenden Regelabweichung und der hieraus wiederum resultierenden Betriebsart dargestellt. Die Drehzahlkurve trägt das Bezugszeichen 32, die Regelabweichungs-Kurve das Bezugszeichen 34 und die Betriebsart-Kurve das Bezugszeichen 36. Wie zu erkennen ist, bleibt bei konstanter Drehzahl die Regelabweichung innerhalb des Toleranzbandes 30. Erst bei Änderung der Soll-Drehzahl verlässt die Regelabweichung das Toleranzband 30, so dass das Bewertungselement 22 nach Vergleich der gemessenen Regelabweichung mit dem in dem Toleranzband-Speicher 28 gespeicherten Toleranzband und Feststellung einer Toleranzband-Über-schreitung, die Betriebsart von Einphasen-Betriebsart auf Mehrphasen-Betriebsart umschaltet. Sobald die Regelabweichung viermal nacheinander, d. h. in Bezug auf vier aufeinander folgende Stator-Phasen 12, 13, 14 innerhalb des Toleranzbandes 30 liegt, wird die Betriebsart wieder zurückgeschaltet auf die Einphasen-Betriebsart. Sobald die Soll-Drehzahl erreicht und stabilisiert ist, bleibt die Regelabweichung wieder kontinuierlich innerhalb des Toleranzbandes 30 und wird der Motor konstant in der Einphasen-Betriebsart betrieben und geregelt.

## Patentansprüche

1. Elektrisch kommutierter Motor (10) mit mehreren Stator-Phasen (12, 13, 14) und einem Rotor, mit
Sensoren (16) zur Erfassung der Regelabweichung des Rotors in Bezug auf die Statorphasen (12, 13, 14), und
einer Phasenregelung (20) für das Stator-Phasen-Drehfeld in Abhängigkeit von der erfassten Regelabweichung,
**dadurch gekennzeichnet,**
**dass** die Phasenregelung (20) einen Einphasenregler (24) für eine Einphasen-Betriebsart und einen Mehrphasen-Regler (26) für eine Mehrphasen-Betriebsait aufweist, und
**dass** ein Regelabweichungs-Bewertungselement (22) vorgesehen ist, dass die Größe der Regelabweichung bewertet und in Abhängigkeit von der Bewertung die Einphasen-Betriebsart oder die Mehr-phasen-Betriebsart wählt.

2. Elektrisch kommutierter Motor (10) nach Anspruch 1, **dadurch gekennzeichnet, dass** dem Bewertungsetement (22) ein Toleranzband-Speicher (28) zugeordnet ist, der Toleranzwerte für die Regelabweichung speichert, wobei das Bewertungselement (22) bei Phasenabweichungen im Toleranzband (30) die Einphasen-Betriebsart und bei Phasenabweichungen außerhalb des Toleranzbandes (30) die Mehrphasen-Betriebsart wählt.

3. Elektrisch kommutierter Motor (10) nach einem der Ansprüche 1 oder 2, **dadurch gekennzeichnet, dass** dem Bewertungselement (22) ein Verzögerungselement (2.3) zugeordnet ist, das das Umschalten von Mehrphasen-Betriebsart auf Einphasen-Betriebsart um einen festgelegten Wert verzögert.

4. Elektrisch kommutierter Motor (10) nach Anspruch 3, **dadurch gekennzeichnet, dass** der festgelegte Wert eine Anzahl von aufeinander folgenden Regelabweichungen innerhalb des Toleranzbandes (30) ist.

5. Verfahren zur Regelung eines elektrisch kommutierten Motors (10) mit mehreren Stator-Phasen (12, 13, 14) und einem Rotor, mit den Verfahrensschritten:
- Erfassung der Regelabweichung des Rotors in Bezug auf die Stator-Phasen (12, 13, 14),
- Phasenregelung des Stator-Phasen-Drehfeides in Abhängigkeit von der erfassten Regelabweichung, und
- Wählen zwischen einer Einphasen-Betriebsart und einer Mehrphasen-Betriebsart in Abhängigkeit von der Größe der Regelabweichung.

## Claims

1. An electrically commutated motor (10) with a plurality of stator phases (12, 13, 14) and a rotor, comprising
sensors (16) for detecting the control deviation of the rotor with respect to the stator phases (12, 13, 14), and
a phase control (20) for the stator phase rotating field as a function of the detected control deviation,
**characterized in**
**that** the phase control (20) comprises a single-phase control (24) for a single-phase mode and a multi-phase control (26) for a multi-phase control, and
**that** a control deviation evaluation element (22) is provided which evaluates the magnitude of the control deviation and selects either the single-phase mode or the multi-phase mode depending on the evaluation.

2. The electrically commutated motor (10) of claim 1, **characterized in that** a tolerance band memory (28) is associated to the evaluation element (22), which memory stores tolerance values for the control deviation, wherein said evaluation element (22) selects the single-phase mode in the event of phase deviations within the tolerance band (30) and selects the multi-phase mode in the event of phase-deviations outside the tolerance band (30).

3. The electrically commutated motor (10) of one of claims 1 or 2, **characterized in that** a delay element (23) is associated to the evaluation element (22), which delay element delays the switching from the multi-phase mode to the single-phase mode by a fixed value.

4. The electrically commutated motor (10) of claim 3, **characterized in that** the fixed value is a number of sequential control deviations within the tolerance band (30).

5. A method for controlling the an electrically commutated motor (10) with a plurality of stator phases (12, 13, 14) and a rotor, comprising the following method steps:
- detecting the control deviation of the rotor with respect to the stator phase (12, 13, 14),
- phase controlling of the stator phase rotating field as a function of the detected control deviation, and
- selecting between a single-phase mode and a multi-phase mode depending on the magnitude of the control deviation.

## Revendications

1. Moteur (10) à commutation électrique avec plusieurs phases de stator (12, 13, 14) et un rotor, comprenant
des capteurs (16) pour détecter l'erreur de réglage du rotor relatif aux phases de stator (12, 13, 14), et
un régulateur de phase (20) pour le champ rotatif des phases de stator, dépendant de l'erreur de réglage détecté,
**caractérisé en ce**
**que** le régulateur de phase (20) comprend un régulateur monophasé (24) pour un mode monophasé et un régulateur polyphasé (26) pour un mode polyphasé, et
**qu'**un élément d'évaluation de l'erreur de réglage (22) est prévu qui évalue la magnitude de l'erreur de réglage et choisit le mode monophasé ou le mode polyphasé en fonction de l'évaluation.

2. Moteur (10) à commutation électrique selon la revendication 1, **caractérisé en ce qu'**une mémoire (28) de bande de tolérance mémorisant des valeurs de tolérance de l'erreur de réglage est assignée à l'élément d'évaluation (22), ledit élément d'évaluation (22) choisissant le mode monophasé en cas d'erreurs de phase dans la bande de tolérance (30) et choisissant le mode polyphasé en cas d'erreurs de phase hors de la bande de tolérance (30).

3. Moteur (10) à commutation électrique selon une des revendications 1 ou 2, **caractérisé en ce qu'**un élément de temporisation (23) est assigné à l'élément d'évaluation (22), ledit élément de temporisation retardant le changement du mode polyphasé au mode monophasé par une valeur fixée.

4. Moteur (10) à commutation électrique selon la revendication 3, **caractérisé en ce que** la valeur fixée est une nombre d'erreurs de réglage séquentiels dans la bande de tolérance (30).

5. Procédé de réglage d'un moteur (10) à commutation électrique avec plusieurs phases de stator (12, 13, 14) et un rotor, comprenant les étapes suivantes:
- détecter l'erreur de réglage du rotor relatif aux phases de stator (12, 13, 14),
- régler la phase du champ rotatif des phases du stator en fonction de l'erreur de réglage détecté, et
- choisir parmi un mode monophasé et un mode polyphasé en fonction de la valeur dudit erreur de réglage.
